# EUROPÄISCHE PATENTSCHRIFT

(11) **EP 0 406 226 B1**
(45) Veröffentlichungstag und Bekanntmachung des Hinweises auf die Patenterteilung: **29.11.1995**
(21) Anmeldenummer: 90890197.8
(22) Anmeldetag: 29.06.1990
(51) Int. Cl.: B29C 47/20

(54) **Wendelkopfverteiler für eine Kunststoff-Extrusionseinrichtung**
Helical distributer for the head of a plastics extruding machine
Répartiteur à hélice pour la tête d'un dispositif d'extrusion en matière plastique

(30) Priorität: 29.06.1989 AT 1606/89
(43) Veröffentlichungstag der Anmeldung: 02.01.1991
(73) Patentinhaber: CINCINNATI MILACRON AUSTRIA, GESELLSCHAFT M.B.H., A-1232 Wien (AT)
(72) Erfinder: Hackl, Leopold, Dipl.-Ing., AT-2351 Wr. Neudorf (AT)
(74) Vertreter: Hehenberger, Reinhard, Dipl.-Ing.

(56) Entgegenhaltungen:
- KUNSTSTOFFE, Band 72, Nr. 4, April 1982, Seiten 198-205, München, DE; J. WORTBERG et al.: "Auslegung und Optimierung von Wendelverteilerwerkzeugen"
- KUNSTSTOFFE, Band 78, Nr. 4, April 1988, Seiten 302-307, München, DE; J. DOBROWSKY: "Wendelverteilerwerkzeuge in der Rohrproduktion"
- SPE JOURNAL, Band 28, Februar 1972, Seiten 34-41; B. PROCTER: "Flow analysis in extrusion dies"
- PLASTICS ENGINEERING, August 1974, Seiten 43-46; W. KURZBUCH: "Control melt temperature with die design"

## Beschreibung

Die Erfindung betrifft einen Wendelkopfverteiler für eine Kunststoff-Extrusionseinrichtung, insbesondere eine solche zum verarbeiten von Polyolefinen, mit einem in einem Gehäuse angeordneten Verteilkopf mit mehreren, nach Art eines mehrgängigen Gewindes auf einen konischen Kern angeordneten Rippen und stirnseitig angeordneten, zu den zwischen den Rippen verbleibenden Gängen führenden Aufnahmekanälen, wobei die Tiefe der Gänge zum Auslaßende des Verteilkopfes hin abnimmt und zwischen dem Verteilkopf und der Innenwand des diesen umgebenden Gehäuses ein Spalt verbleibt, und wobei das Verhältnis der Tiefe der Gänge zu deren Breite am einlaßseitigen Ende des Verteilkopfes zumindest gleich 2,5, vorzugsweise aber größer ist.

Bei solchen Verteilern ergibt sich stets das Problem, diese so zu dimensionieren, daß sich rheologisch günstige Verhältnisse ergeben. Dazu ist es wesentlich, ein günstiges Verhältnis zwischen dem sich in den Gängen erstreckenden Materialfluß und dem sich in axialer Richtung über die Rippen hinweg erstreckenden Materialfluß zu erzielen.

Aus KUNSTSTOFFE, Band 72, Nr. 4, April 1982, Seiten 198-205; J. Wortberg et.al. "Auslegung und Optimierung von Wendelverteilwerkzeugen" ist ein Wendelkopfverteiler mit den Merkmalen des unabhängigen Anspruchs 1 bekannt. Dabei wird zwar angegeben, daß die Verteilung mit zunehmender Zahl von Kanälen besser werde, wobei allerdings der Druckverbrauch ansteige. Daher wird dem Fachmann im Stand der Technik die Lehre gegeben, die Zahl der Kanäle klein zu halten, da ein optimaler Wendelverteiler möglichst wenig Kanäle habe, weil das Fräsen und Polieren der Kanäle aufwendig sei.

Ziel der Erfindung ist es, einen Wendelkopfverteiler der eingangs erwähnten Art vorzuschlagen, bei dem sich ein geringer Werkzeugdruckaufbau auch bei hohen Durchsätzen mit niedrigen Massetemperaturen ergibt.

Erfindungsgemäß wird dies dadurch erreicht, daß der Spalt zwischen dem Verteilkopf und der Innenwand des Gehäuses am einlaßseitigen Ende des Verteilkopfes zumindest 0,6 mm beträgt, vorzugsweise aber größer ist, und daß die Anzahl der zu den Gängen führenden Aufnahmekanäle in Abhängigkeit vom Durchmesser des Verteilkopfes gewählt ist, wobei sich die Anzahl der Aufnahmekanäle bei einer Vergrößerung des Durchmessers des Verteilkopfes von etwa 30 mm, vorzugsweise um einen Aufnahmekanal, erhöht.

Durch diese Maßnahmen ergibt sich eine exakte Schmelzeverteilung, die eine wesentliche Verringerung der Wanddickenabweichungen des extrudierten Gegenstandes mit sich bringt. Dies vermeidet beim Herstellen von Rohren Schwachstellen und führt zu einer hohen Festigkeit der Rohre.

Nach dem Vorschlag der Erfindung wird die Anzahl der zu den Gängen führenden Aufnahmekanäle in Abhängigkeit vom Durchmesser des Verteilkopfes gewählt, wobei sich die Anzahl der Aufnahmekanäle vorzugsweise bei einer Änderung des Durchmessers des Verteilkopfes von etwa 30 mm um einen Kanal ändert.

Auf diese Weise ist es möglich, eine Reihe von Wendelkopfverteilern für verschiedene Rohrdurchmesser auszulegen, da sich bei Einhaltung des Zusammenhanges zwischen dem Durchmesser des Verteilkopfes und der Anzahl der Gänge sehr ähnliche Verhältnisse, insbesondere gleichbleibende Breiten der Rippen, ergeben und sich daher die Reibungsverhältnisse nur wenig ändern.

Weiters hat es sich als günstig erwiesen, wenn der Steigungswinkel der Gänge maximal 12° beträgt.

Durch diese Maßnahmen ergibt sich eine sehr gute Schmelzeverteilung. So hat sich gezeigt, daß mit größer werdendem Steigungswinkel die Strömung im Wendelkanal größer wird und sich die Schmelzeverteilung verschlechtert.

Nach einem weiteren Merkmal der Erfindung kann vorgesehen sein, daß der Kegelwinkel des Kernes des Verteilkopfes minimal 9° beträgt.

An sich vergrößert sich mit kleiner werdendem Kegelwinkel die Baulänge, anderseits verbessert sich mit kleiner werdendem Kegelwinkel die Schmelzeverteilung. Durch die Einhaltung des erwähnten Minimalwertes wird einerseits eine sehr gute Schmelzeverteilung erreicht und anderseits eine unnötige Verlängerung der Baulänge des Verteilkopfes vermieden, da sich bei einer Verkleinerung des Kegelwinkels auf Werte unter 9° keine weitere Verbesserung der Schmelzeverteilung mehr ergibt.

Ein weiterer Vorteil der erfindungsgemäßen Maßnahmen liegt darin, daß es durch die Einhaltung der angegebenen Dimensionierungsrichtlinien möglich ist, auf einfache Weise eine Anpassung an verschiedene Größen zu erreichen.

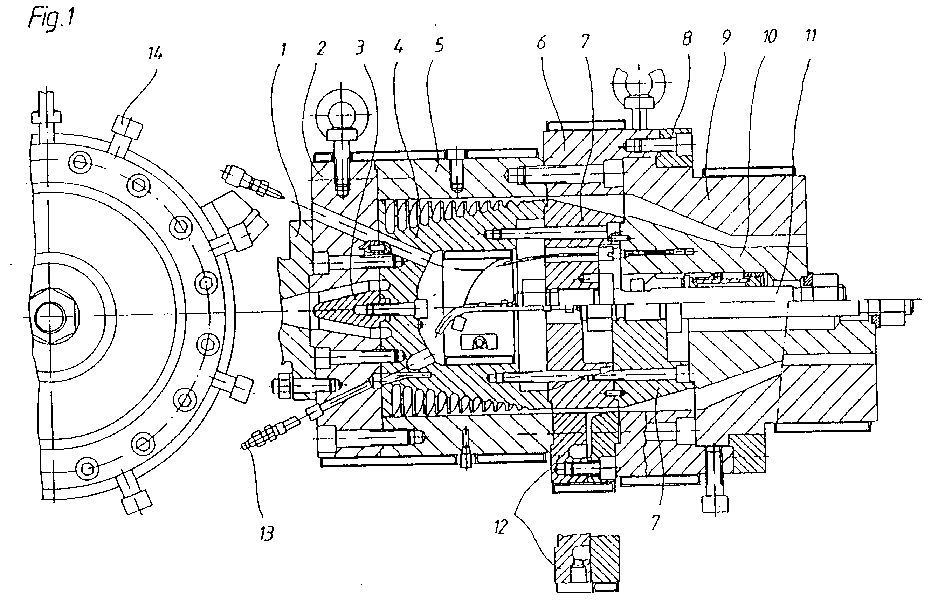

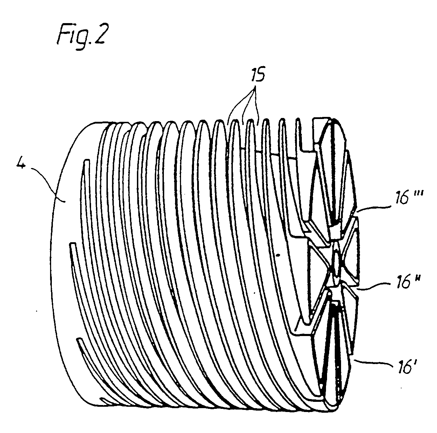

Die Erfindung wird nun anhand der Zeichnungen näher erläutert. Fig. 1 zeigt einen Querschnitt durch einen erfindungsgemäßen Wendelkopfverteiler und Fig. 2 einen Verteilkopf im Schrägriß.

Der erfindungsgemäße Wendelkopfverteiler ist an einem Adapter 1 befestigt, der mit einer Anspeiseplatte 2 verschraubt ist, wobei der Adapter 1 von einem Zuführkanal durchsetzt wird (Fig. 1). Weiters sind in der Anspeiseplatte 2 Kanäle für die Zufuhr von Stützluft vorgesehen, die in Anschlußnippeln 13 enden.

In der konisch ausgebildeten, zentralen Bohrung der Anspeiseplatte 2 wird eine Verteilerspitze 3 gehalten.

Weiters ist die Anspeiseplatte 2 mit einem Verteilkopf 4 und einem Kopfgehäuse 5 verschraubt. Dabei durchsetzen die Kanäle zur Zufuhr der Stützluft auch die Stirnwand des Verteilkopfes 4.

Der Verteilkopf 4 weist an seiner Mantelfläche Gänge 15 auf, die in mehreren, versetzt ineinandergreifenden Schraubenlinien verlaufen und von Aufnahmekanälen 16', 16'', 16''' usw. gespeist werden (Fig. 2). Die Außenflächen der Stege der Gänge 15 liegen in einer zylindrischen Mantelfläche. Der Kerndurchmesser dieser jeweils eine Schraubennut bildenden Gänge 15 verjüngt sich gegen die Anspeiseplatte 2 zu. Dabei ist der Kern zur Längsachse des Wendelverteilers unter einen Winkel von 9° oder mehr geneigt.

Die Anspeiseplatte 2 bildet mit der Verteilerspitze 3, dem Verteilkopf 4 und dem Kopfgehäuse 5 den eigentlichen Rohrkopf.

Das Kopfgehäuse 5 ist mit einem Düsengehäuse 6 verschraubt. Der Verteilkopf 4 ist mit einem Zwischenring 7 verschraubt. Dabei begrenzt der Zwischenring 7 mit der Innenwand des Düsengehäuses 6 einen Spalt, der sich in Strömungsrichtung des plastifizierten Materials erweitert.

Dem Düsengehäuse 6 kann, wie in der unteren Hälfte der Zeichnung dargestellt, auch eine Farbstreifeneinheit 12 vorgeschaltet sein.

An den Zwischenring 7 schließt eine Zentrierdüse 9 an, die mittels eines Spannringes 8 gehalten ist, der mit dem Düsengehäuse 6 verschraubt ist. Die Innenwand dieser Zentrierdüse 9 verjüngt sich in Strömungsrichtung des plastifizierten Materials.

Im Inneren der Zentrierdüse 9 ist auf einer Dornstange 11 ein Dorn 10 gehalten, dessen Außenseite sich ebenfalls in Strömungsrichtung des plastifizierten Materials verjüngt. Dabei verengt sich der zwischen dem Dorn 10 und der Zentrierdüse 9 verbleibende Spalt in Strömungsrichtung des plastifizierten Materials.

Die Gänge 15 sind so ausgebildet, daß das Verhältnis der Tiefe t der Gänge 15 zu deren Breite b am einlaßseitigen Ende des Verteilkopfes 4 zumindest 2,5:1 beträgt, vorzugsweise aber größer ist. Weiters beträgt der Spalt zwischen dem Verteilkopf 4 und der Innenwand des Kopfgehäuses 5 am einlaßseitigen Ende des Wendelverteilers mindestens 0,6 mm, vorzugsweise aber mehr, z.B. 1,3 mm.

Der Steigungswinkel der Gänge 15 beträgt maximal 12°, wodurch einerseits eine sehr gute Verteilung der Schmelze erreicht wird und anderseits eine zu große Länge des Wendelverteilers vermieden wird.

Der Kegelwinkel α des Kernes des Verteilkopfes 4 beträgt mindestens 9°, wodurch ein guter Kompromiß zwischen der Baulänge und der Verteilungswirkung erzielt wird.

Die Anzahl der Aufnahmekanäle 16', 16'', 16''' usw. des Verteilkopfes 4 ist in Abhängigkeit vom Durchmesser der Verteilkopfes 4 gewählt, wobei sich bei einer Änderung des Durchmessers des Verteilkopfes 4 um 30 mm die Kanalzahl um eins ändert.

## Patentansprüche

1. Wendelkopfverteiler für eine Kunststoff-Extrusionseinrichtung, insbesondere eine solche zum Verarbeiten von Polyolefinen, mit einem in einem Gehäuse (5) angeordneten Verteilkopf (4) mit mehreren, nach Art eines mehrgängigen Gewindes auf einen konischen Kern angeordneten Rippen und stirnseitig angeordneten, zu den zwischen den Rippen verbleibenden Gängen (15) führenden Aufnahmekanälen (16), wobei die Tiefe der Gänge (15) zum Auslaßende des Verteilkopfes (4) hin abnimmt und zwischen dem Verteilkopf (4) und der Innenwand des diesen umgebenden Gehäuses (5) ein Spalt verbleibt, und wobei das Verhältnis der Tiefe (t) und der Gänge (15) zu deren Breite (b) am einlaßseitigen Ende des Verteilkopfes (4) zumindest gleich 2,5, vorzugsweise aber größer ist, dadurch gekennzeichnet, daß der Spalt zwischen dem Verteilkopf (4) und der Innenwand des Gehäuses (5) am einlaßseitigen Ende des Verteilkopfes (4) zumindest 0,6 mm beträgt, vorzugsweise aber größer ist, und daß die Anzahl der zu den Gängen (15) führenden Aufnahmekanäle (16', 16'', 16''') in Abhängigkeit vom Durchmesser des Verteilkopfes (4) gewählt ist, wobei sich die Anzahl der Aufnahmekanäle (16', 16'', 16''') bei einer Vergrößerung des Durchmessers des Verteilkopfes (4) von etwa 30 mm, vorzugsweise um einen Kanal, erhöht.

2. Wendelkopfverteiler nach Anspruch 1, dadurch gekennzeichnet, daß der Steigungswinkel der Gänge (15) maximal 12° beträgt.

3. Wendelkopfverteiler nach Anspruch 1 oder 2, dadurch gekennzeichnet, daß der Kegelwinkel des Kernes des Verteilkopfes (4) minimal 9° beträgt.

## Claims

1. Helical separator head for a plastics extrusion apparatus, in particular for processing polyolefines, with a separator head (4) located in a housing (5), and having a plurality of ribs located in the manner of a multiple threading on a conical core, and with receiver ducts (16) located on the end face and leading to the threads (15) remaining between the ribs, the depth of the threads (15) decreasing in the direction of the outlet end of the separator head (4), a slot remaining between the separator head (4) and the inner wall of the housing (5) surrounding said separator head (4), the ratio of the depth (t) and of the threads (15) to their width (b) at the inlet end of the separator head (4) being at least equal to 2,5 but preferably larger, characterised in that the slot between the separator head (4) and the inner wall of the housing (5) at the inlet end of the separator head (4) is at least 0.6 mm, but preferably larger, and in that the number of the receiving ducts (16', 16'', 16''') leading to the threads (15) is selected in dependence on the diameter of the separator head (4), the number of receiving ducts (16', 16'', 16''') increasing, preferably by one duct, upon enlargement of the diameter of the separator head (4) by approximately 30 mm.

2. Helical separator head according to claim 1, characterised in that the pitch angle of the threads (15) is a maximum of 12°.

3. Helical separator head according to claim 1 or 2, characterised in that the cone angle of the separator head (4) is a minimum of 9°.

## Revendications

1. Répartiteur à hélices pour un dispositif d'extrusion de matière plastique, en particulier pour la mise en forme de polyoléfines, comprenant une tête de répartition (4) disposée dans un carter (5) avec plusieurs ailettes disposées à la manière d'un filet à pas multiples sur un noyau conique et avec des canaux de réception (16) disposés frontalement et menant vers les chéneaux (15) subsistant entre les ailettes, la profondeur des chéneaux (15) allant en diminuant vers l'extrémité de sortie de la tête de répartition (4) et une fente subsistant entre la tête de répartition (4) et la face intérieure du carter (5) entourant cette dernière, et le rapport de la profondeur (t) des chéneaux (15) à la largeur (b) de ces derniers étant, à l'extrémité de la tête de répartition (4), côté entrée, au moins égal à, mais de préférence supérieur à 2,5, caractérisé par le fait que la fente entre la tête de répartition (4) et la face intérieure du carte (5), à l'extrémité, côté sortie, de la tête de répartition (4) s'élevant à au moins, mais de préférence à plus de 0,1 mm, et que le nombre des canaux de réception (16', 16'', 16''') menant vers les chéneaux (15) étant choisis en fonction du diamètre de la tête de répartition (4), le nombre des canaux de réception (16', 16'', 16''') allant en augmentant, de préférence d'un canal, en cas d'accroissement du diamètre de la tête de répartition (4) d'environ 30 mm.

2. Répartiteur à hélices suivant la revendication 1, caractérisé par le fait que l'angle de pente des chéneaux hélicoïdaux (15) s'élève au plus à 12°.

3. Répartiteur à hélices suivant la revendication 1 ou 2, caractérisé par le fait que l'angle de cône du noyau de la tête de répartition (4) s'élève à au moins 9°.
